# EUROPÄISCHE PATENTANMELDUNG

(11) **EP 1 494 176 A2**
(43) Veröffentlichungstag der Anmeldung: **05.01.2005**
(21) Anmeldenummer: 04102430.8
(22) Anmeldetag: 01.06.2004
(51) Int. Cl.: G07B 15/00, B60R 11/00

(54) **Befestigung eines Maut-Rechners in einem Kraftfahrzeug**

(30) Priorität: 01.07.2003 DE 10329784
(71) Anmelder: SIEMENS AKTIENGESELLSCHAFT, 80333 München (DE)
(72) Erfinder: Bacic, Helmut, 78126, Königsfeld (DE); Hanke, Klaus-Dieter, 78052, Villingen-Schwenningen (DE); Kraus, Ulrich, 78056, Villingen-Schwenningen (DE); Wangler, Josef, 78052, Villingen-Schwenningen (DE); Weber, Robert, 78086, Brigachtal (DE)

(57) **Zusammenfassung**

Es wird vorgeschlagen, einem als Aufbaugerät ausgebildeten Maut-Rechner (1) einen Haltearm (5) zuzuordnen, welcher mit dem Maut-Rechner (1) gelenkig verbunden und an der Windschutzscheibe (15) des Kraftfahrzeuges befestigbar ist. Der Maut-Rechner (1) selbst liegt dann unter Zwischenschaltung eines vorzugsweise doppelseitig mit Klebstoff beschichteten, vorzugsweise elastomeren Auflageelementes (16) relativ kleinflächig auf der Armaturentafel (17) des Kraftfahrzeuges auf.

## Beschreibung

Die Erfindung betrifft die Befestigung eines Maut-Rechners in einem Kraftfahrzeug, wobei der Maut-Rechner wenigstens mit einem Display ausgerüstet und auf der Armaturentafel des Kraftfahrzeuges angeordnet ist.

Geräte, die nicht als Einbaugeräte konzipiert sind oder nicht als Einbaugeräte konzipiert werden können, weil sie für Ihren Einsatzzweck, beispielsweise in Kraftfahrzeugen, nicht generell vorgesehen sind, oder auf Grund neuer gesetzlicher Vorschriften nachgerüstet werden müssen, andererseits aber im unmittelbaren Beobachtungs- und Handhabungsbereich des Fahrers angeordnet werden sollen, können ggf. unmittelbar an der Windschutzscheibe bzw. müssen bei größeren Abmessungen und größerem Gewicht an der der Windschutzscheibe zugeordneten Oberseite der Armaturentafel des betreffenden Kraftfahrzeuges angebracht werden. Diese Situation ist bei Maut-Rechnern gegeben, die bekanntlich der Berechnung von Straßenbenutzungsgebühren (Maut) dienen.

Eine derartige Mautberechnung geht von einer Fahrstreckenidentifikation aus, bei der nach jeder mittels des in dem Maut-Rechner angeordneten GPS-Empfängers z. B. sekundenweise ermittelten Positionsbestimmung ein Vergleich mit den in dem Maut-Rechner gespeicherten gebührenpflichtigen Straßenabschnitten sowie den jeweils festgesetzten Gebührentarifen vorgenommen wird. Ist eine Benutzungsgebühr unter Einbeziehung von Benutzer- und Fahrzeugdaten errechnet, wird diese vom Gebührenguthaben des Benutzers abgebucht und ein Berechtigungsnachweis zur Benutzung des betreffenden Straßenabschnitts erstellt. Dabei kann als Guthabenträger eine in den Maut-Rechner eingeführte Chipkarte dienen und/oder es kann vorgesehen sein, dass die jeweiligen Benutzungsgebühren und andere Daten vorzugsweise über ein Mobilfunknetz einem Zentralsystem mitgeteilt werden, welches seinerseits die Aktualisierung der für die Gebührenerhebung erforderlichen Daten vornimmt. Der erstellte Berechtigungsnachweis kann automatisch, dass heißt, während der Fahrt kann überprüft werden, wenn das betreffende Kraftfahrzeug eine für diesen Zweck im jeweiligen Straßenabschnitt im allgemeinen über oder seitlich der Fahrbahn fest angeordnete, ggf. auch auf einem Fahrzeug installierte Bake passiert. Dabei erfolgt entsprechend dem vorgesehenen Abfrageverfahren die Kommunikation zwischen einer Bake und dem Maut-Rechner beispielsweise über eine geeignete Mikrowellen- oder Infrarotverbindung, wobei ein entsprechendes Sende- und Empfangsmodul entweder unmittelbar an der Windschutzscheibe des betreffenden Fahrzeuges befestigt oder in geeigneter Weise schwenkbar und somit in eine Abfragerichtung ausrichtbar dem Maut-Rechner zugeordnet ist.

Für eine, wie eingangs angedeutet, Befestigung des Maut-Rechners auf einer Armaturentafel ist bereits vorgeschlagen worden, einen Träger vorzusehen, welcher, um beispielsweise Gebührenguthaben und Statusinformationen am Display des Maut-Rechners gut ablesen zu können, eine gewisse Verschwenkbarkeit des mit dem Träger verbindbaren Maut-Rechners ermöglicht, mit welchem andererseits aber auch optisch wenig vorteilhafte, am Gehäuse des Maut-Rechners auszubildende Laschen oder Schienen für eine unmittelbare Befestigung des Maut-Rechners auf einer Armaturentafel vermieden werden können. Dem Träger seinerseits sind wegen der von Fahrzeugtyp zu Fahrzeugtyp erheblichen Unterschiede in der Topographie der Armaturentafeln vorzugsweise drei justierbare Befestigungselemente zugeordnet, welche durch Kleben mit der jeweiligen Armaturentafel verbunden werden.

Abgesehen davon, dass gewisse Armaturentafeln für eine derartige Befestigung eines Maut-Rechners nicht die erforderliche Fläche bieten, weil sie steil gegen die Windschutzscheibe abfallen, also einen rippenförmigen Querschnitt aufweisen, und nachträgliche Montagearbeitsgänge grundsätzlich nur unter erschwerten Bedingungen vorgenommen werden können, muss das Anbringen des Maut-Rechners zur Vermeidung von Beschädigungen der Oberfläche einer Armaturentafel, beispielsweise mit Klebstoffresten, mit einem Höchstmaß an Sorgfalt erfolgen, so dass ein hoher Montageaufwand in Kauf zu nehmen ist. Auf der anderen Seite ist ein Maut-Rechner derart auszubilden und anzubringen, dass das Sichtfeld des Fahrers möglichst wenig beeinträchtigt ist, und das Gerät und dessen Befestigung auch ästhetischen Belangen gerecht wird.

Die Aufgabe der vorliegenden Erfindung bestand somit darin, für das Befestigen eines Maut-Rechners auf einer Armaturentafel Maßnahmen vorzusehen, welche den bekannten Befestigungsaufwand erheblich reduzieren und die Akzeptanz eines Maut-Rechners als Aufbaugerät verbessern.

Die Lösung der Aufgabe sieht vor, dass dem Maut-Rechner ein um eine Achse schwenkbarer Haltearm zugeordnet ist, dass das freie Ende des Haltearmes derart ausgebildet ist, dass es an der Windschutzscheibe des Fahrzeuges befestigbar ist und dass der Maut-Rechner auf der Armaturentafel abgestützt ist.

Ein bevorzugtes Ausführungsbeispiel der Erfindung ist dadurch gekennzeichnet, dass der Haltearm brückenförmig ausgebildet ist, und dass ein die Lagerschenkel des Haltearmes verbindender Steg für die Befestigung des Maut-Rechners an der Windschutzscheibe des Fahrzeuges vorgesehen ist.

Weitere vorteilhafte Ausbildungen der Erfindung gehen aus den nicht zitierten Unteransprüchen und der nachfolgenden Beschreibung hervor.

Die erfindungsgemäße Lösung bietet insbesondere den Vorteil, dass der Maut-Rechner ohne einen zusätzlichen Träger zu verwenden befestigt werden kann. Dass heißt, mit der gefundenen Lösung lässt sich der Bauteileaufwand erheblich reduzieren und eine weniger Bauhöhe beanspruchende und somit gefällige Anordnung des Maut-Rechners erzielen, wobei mit einer in Blickrichtung des Fahrers flachen Ausbildung des Gehäuses des Maut-Rechners eine Beeinträchtigung des Sichtfeldes des Fahrers durch den Maut-Rechner vermieden ist. Wesentlich ist, dass die eigentliche Befestigung des Maut-Rechners mittels einer Kombination zweier Befestigungs- bzw. Halterungsmaßnahmen erfolgt. Dabei wird durch das Abstützen und Anheften des Maut-Rechners auf der Armaturentafel sowie durch die gelenkige Verbindung zwischen der Befestigungsstelle an der Windschutzscheibe und dem Maut-Rechner die durch fahrtabhängige Momente verursachte Belastung der Befestigungsstelle an der Windschutzscheibe erheblich reduziert. Mit anderen Worten, der Maut-Rechner ist über den Haltearm an der Windschutzscheibe fixiert, sein Gewicht wird jedoch von der Armaturentafel getragen. Dabei ist es zweckmäßig, wenn das Abstützen des Maut-Rechners in dessen Schwerpunktbereich erfolgt. Mit der quasi punkt- oder linienförmigen Auflage des Maut-Rechners auf einer Armaturentafel und der in gewissen Grenzen freien Wahl der Befestigungsstelle des Haltearmes an der Windschutzscheibe ist außerdem eine Wahlmöglichkeit für die Lage des Displays des Maut-Rechners gegeben.

Zweckmäßig verläuft die Achse, um welche der Haltearm schwenkbar ausgebildet ist, in etwa parallel zur Anzeigeebene des Displays oder zu der Ebene der Windschutzscheibe des Kraftfahrzeuges. Diese Anordnung ist deshalb besonders günstig, weil die Befestigung auf diese Weise an jede der typischen Einbausituationen anpassbar ist, insbesondere hinsichtlich der unterschiedlichen Winkel zwischen der Windschutzscheibe und der Armaturentafel.

Für eine maximale Flexibilität beim Einbau des erfindungsgemäßen Maut-Rechners ist es sinnvoll, wenn sich der Maut-Rechner mit einer Fläche auf der Armaturentafel abstützt, die kleiner ist als die Fläche der Normalprojektion des Maut-Rechners auf der Armaturentafel. Die abstützende Fläche beträgt hierbei vorzugsweise zwischen 5 % und 30 % der Fläche der Normalprojektion des Maut-Rechners auf der Armaturentafel. Diese Ausbildung hat einerseits den Vorteil, dass der Maut-Rechner weitestgehend rückstandsfrei bei einer zuvor stoffschlüssig ausgebildeten Verbindung zwischen dem Maut-Rechner und der Armaturentafel wieder entfernt werden kann, und andererseits macht die Erfindung die Befestigung des Maut-Rechners von der Topographie der Armaturentafel, deren Oberfläche im Allgemeinen gewölbt ist und in sich mehr oder weniger skulpturiert sein, unabhängig. Wesentlich hierbei ist, dass sich der Maut-Rechner kleinflächig auf der Armaturentafel des Fahrzeuges abstützt.

Um dabei die Auswirkungen insbesondere von fahrtbedingten Vertikalbeschleunigungen auf den auf der Armaturentafel aufliegenden Maut-Rechner zu dämpfen bzw. zu vermeiden, kann in vorteilhafter Weise zwischen dem Maut-Rechner und der Armaturentafel ein geeignetes, dass heißt, topographiegerechtes scheiben- oder streifenförmiges Auflageelement vorgesehen werden, welches beispielsweise aus einem Schaumstoff hergestellt und beidseitig mit Klebstoff beschichtet sein kann. Auch miteinander in Wirkverbindung bringbare Klettverbindungsmittel können vorgesehen werden. Außerdem ist es denkbar, das Auflageelement unmittelbar an dem Gehäuse des Maut-Rechners auszubilden, dass heißt, spritzgießtechnisch aus elastomerem Material, vorzugsweise mit einer haftenden, zumindest aber rutschfesten Ausrüstung, anzuformen. Denkbar ist ferner, dass heißt, die Oberfläche einer Armaturentafel eignet sich für eine saugende Haftung, als Auflageelement wenigstens einen Saugnapf vorzusehen und diesen in geeigneter Weise an dem Gehäuse des Maut-Rechners anzubringen. Wird der Haltearm mittels geeigneter an der Windschutzscheibe befestigter Schienen angebracht, lässt sich eine auf einfache Weise lösbare Befestigung und somit eine wahlweise Verwendbarkeit des Maut-Rechners realisieren.

Zweckmäßiger Weise ist die Lagerung des Haltearmes, der aus Stabilitätsgründen vorzugsweise brückenförmig ausgebildet ist, derart gestaltet, dass eine Montage des Haltearmes am Einbauort möglich ist und somit entsprechend den Gegebenheiten am Einbauort, dass heißt, entsprechend der Tiefe und Querschnittsform einer Armaturentafel sowie der Neigung der Windschutzscheibe, ein für die Lage des Maut-Rechners bzw. dessen Displays längerer oder kürzerer, ggf. auch abgewinkelter Haltearm wählbar ist. Selbstverständlich kann der Haltearm auch einarmig ausgebildet sein. Wesentlich ist eine breite und somit kippfreie Lagerung an dem Gehäuse des Maut-Rechners. Insbesondere bei einer brückenförmigen Ausbildung des Haltearmes ist es denkbar, den Steg des Haltearmes gelenkig mit den Lagerschenkeln zu verbinden, womit eine noch höhere Anpassungsflexibilität erzielt werden kann. Außerdem lässt sich der Steg des Haltearmes in vorteilhafter Weise als Träger eines Sende- und Empfangsmoduls für die Kommunikation mit z. B. ortsfesten Baken ausbilden. Erwähnt sei ferner, dass die Lagerschenkel eines brückenförmigen Haltearmes relativ schmal gestaltet werden können, so dass eine Beeinflussung der Belüftung der Windschutzscheibe durch die Befestigung des Maut-Rechners ausgeschlossen ist.

Im Folgenden sei die Erfindung anhand zweier vereinfacht dargestellter Ausführungsbeispiele von Maut-Rechnern sowie einer Einbauskizze näher erläutert. Es zeigen:
- Figur 1: eine Frontansicht eines ersten Ausführungsbeispiels eines Maut-Rechners,
- Figur 2: eine Draufsicht des Maut-Rechners gemäß Figur 1,
- Figur 3: eine Einbauskizze mit einer Seitenansicht des Maut-Rechners gemäß den Figuren 2 und 3 in Zuordnung zu einer schematisch dargestellten Armaturentafel sowie einer Windschutzscheibe eines Kraftfahrzeuges,
- Figur 4: eine Frontansicht eines zweiten Ausführungsbeispiels eines Maut-Rechners,
- Figur 5: eine Seitenansicht des Maut-Rechners gemäß Figur 4.

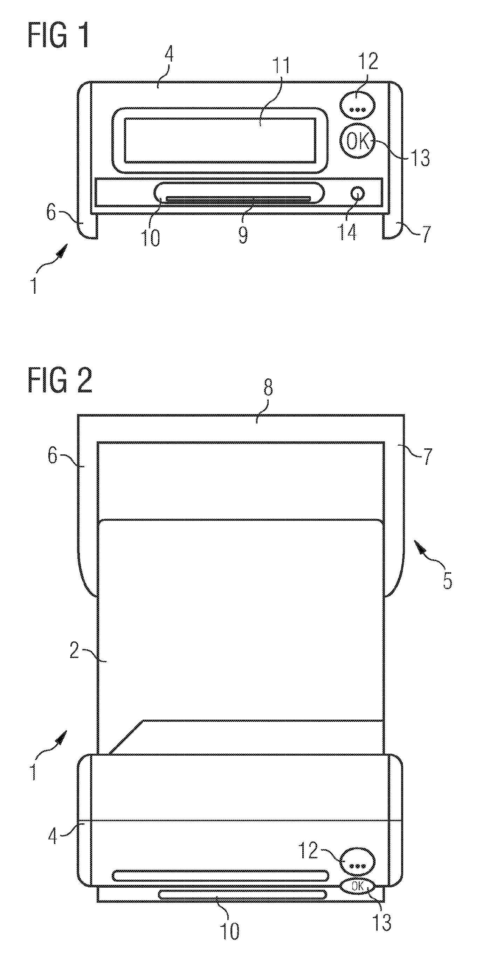

Wie aus den Figuren 1, 2 und 3 ersichtlich ist, ist das Gehäuse des dargestellten Maut-Rechners 1 im Wesentlichen aus drei Gehäusebauteilen, nämlich einem Deckelteil 2, einem Bodenteil 3 und einer Frontblende 4, zusammengefügt. Ein brückenförmiger Haltearm 5, dessen Lagerschenkel mit 6 und 7 und dessen die Lagerschenkel 6, 7 verbindender Steg mit 8 bezeichnet sind, ist mit dem Maut-Rechner 1 schwenkbar verbunden, wobei die Schwenkachse des Haltearmes 5 im Wesentlichen in einer zur Anzeigeebene des Displays parallelen Ebene liegt bzw. sich rechtwinklig zur Hochachse des Maut-Rechners 1 erstreckt. Der des Sichtfeldes wegen, aber auch aus ästhetischen Gründen, so flach wie möglich gestaltete Maut-Rechner 1 beinhaltet im Wesentlichen eine den verschiedenen elektronischen Funktionsbaugruppen zugeordnete Leiterplatte, eine mit der Leiterplatte kontaktierte Displaybaugruppe sowie ein Chipkarten-Aufnahmeaggregat. Letzterem sind in der Frontblende 4 eine Einstecköffnung 9 und eine mit 10 bezeichnete Greifmulde zugeordnet. 11 bezeichnet das Deckglas des Displays, dessen Anzeigen durch Tasten 12 und 13 anwähl- und fortschaltbar sind. Ein ebenfalls in der Frontblende 4 angeordnetes Leuchtelement 14 dient der Anzeige der Betriebsbereitschaft des Maut-Rechners 1.

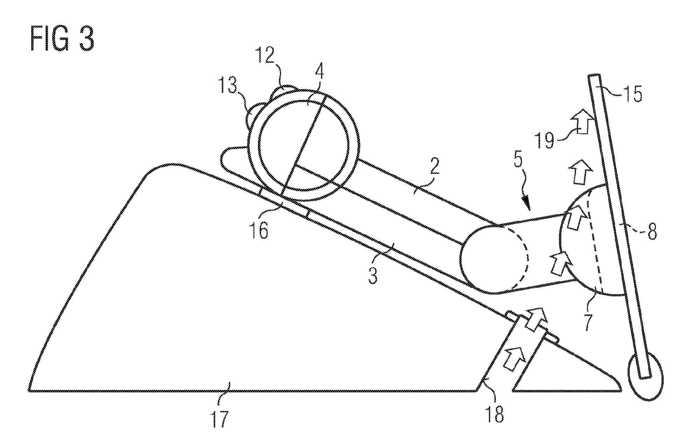

Die Einbauskizze, Figur 3, zeigt die Anordnung des Maut-Rechners 1 in einem Kraftfahrzeug, wobei der mit dem Maut-Rechner 1 schwenkbar verbundene Haltearm 5 bzw. der Steg 8 des Haltearmes 5 unmittelbar an der Windschutzscheibe 15 durch Kleben befestigt ist, und der Maut-Rechner 1 unter Zwischenlage eines scheiben- oder streifenförmigen Auflageelementes 16 auf der Armaturentafel 17 des betreffenden Kraftfahrzeuges aufliegt. Beim Kleben des Haltarmes 5 an der Windschutzscheibe kann die bei Rückblickspiegeln übliche, im Allgemeinen gut reproduzierbare Klebetechnik angewandt werden. Das Auflageelement 16 besteht vorzugsweise aus einem Schaumstoffmaterial, welches doppelseitig mit Klebstoff beschichtet ist, so dass der Maut-Rechner 1 nicht nur aufliegt, sondern fahrttypische Kräfte dämpfend an der Armaturentafel angeheftet ist. Anstatt eines Auflageelementes 16 aus klebstoffbeschichtetem Schaumstoffmaterial kann beispielsweise auch ein trägerloser Klebstoffkörper aus einem Acrylpolymer verwendet werden. Erfolgt die Kommunikation bezüglich der Benutzungsberechtigung über beispielsweise eine Mikrowellen- oder Infrarotverbindung, kann der Steg 8 als ein der Aufnahme des entsprechenden Sende- und Empfangsmoduls dienendes Gehäuse ausgebildet sein. Die erforderlichen Signalund Versorgungsleitungen lassen sich in diesem Falle zugriffsgeschützt in einem der Lagerschenkel 6, 7 verlegen. Erwähnenswert ist ferner, dass die brückenförmige Ausbildung des Haltearmes 5 eine praktisch spielfreie und stabile Halterung des Maut-Rechners 1 mit relativ schmalen Lagerschenkeln 6, 7 ermöglicht. Letzteres ist insofern von Bedeutung, als der durch Düsen 18 in der Armaturentafel 17 austretende Luftstrom 19 zum Defrosten und Trocknen der Windschutzscheibe 15 in seiner Wirkung nicht behindert wird.

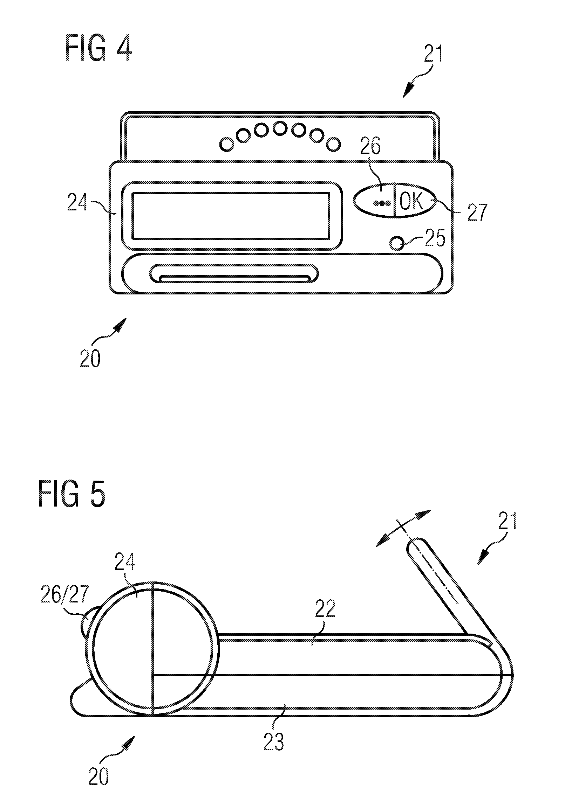

Dem mit den Figuren 4 und 5 dargestellten und mit dem vorstehend beschriebenen Maut-Rechner 1 weitgehend identischen Maut-Rechner 20 ist ein Haltearm 21 zugeordnet, welcher im Wesentlichen plattenförmig ausgebildet ist, wobei der plattenförmige Haltearm 21, bezogen auf seine Schwenkachse, in einer radialen Ebene angeordnet ist. Der Haltearm 21 kann ferner als ein ein Sende- und Empfangsmodul für Mikrowellen-Kommunikation aufnehmendes Gehäuse ausgebildet sein. Der Vollständigkeit halber sei erwähnt, dass der Maut-Rechner 20 ebenfalls aus einem Deckelteil 22, einem Bodenteil 23 und einer Frontblende 24 zusammengefügt und mit einer Displaybaugruppe und einem Chipkarten-Aufnahmeaggregat ausgerüstet ist. 25 stellt in analoger Weise zu dem Maut-Rechner 1 ein Leuchtelement zur Anzeige der Betriebsbereitschaft dar. Mit 26 und 27 sind den Tasten 12 und 13 entsprechende Tasten bezeichnet, die der Eingabe, beispielsweise von Identifikationen, oder dem Aufrufen von Positionsangaben oder von abgebuchten Geldbeträgen bzw. Restgeldbeträgen dienen. Im Gegensatz zu dem Ausführungsbeispiel gemäß den Figuren 1, 2 und 3 ist bei dem Ausführungsbeispiel gemäß den Figuren 4 und 5 der Haltearm 21 innerhalb der Konturen von Deckelteil 22 und Bodenteil 23 des Maut-Rechners 20 gelagert, dass heißt, Deckelteil 22 und Bodenteil 23 sind derart ausgestaltet, dass mit dem Zusammenfügen der beiden Gehäusebauteile Lagerungen tragende Lagerschenkel entstehen, welchen an dem Haltearm 21 angeformte Achsansätze zugeordnet sind.

Die Befestigung des Maut-Rechners 20 erfolgt in der gleichen Weise wie die Befestigung des Maut-Rechners 1, dass heißt, einerseits durch Anheften auf der Armaturentafel, andererseits durch eine Klebeverbindung des Haltearmes 21 an der Windschutzscheibe des betreffenden Fahrzeuges. Dabei kann abhängig von der Wölbung der Windschutzscheibe der Haltearm 21 relativ großflächig oder, unter Verwendung geeigneter Abstandhalter, linien- oder punktförmig an wenigstens zwei Stellen befestigt werden, wobei die bereits erwähnten trägerlosen Klebstofffilme bzw. Klebstoffkörper Anwendung finden können.

## Patentansprüche

1. Befestigung eines Maut-Rechners in einem Kraftfahrzeug, wobei der Maut-Rechner wenigstens mit einem Display ausgerüstet und auf der Armaturentafel des Kraftfahrzeuges angeordnet ist, **dadurch gekennzeichnet, dass** dem Maut-Rechner (1) ein um eine Achse schwenkbarer Haltearm (5) zugeordnet ist, dass das freie Ende des Haltearmes (5) derart ausgebildet ist, dass es an der Windschutzscheibe (15) des Fahrzeuges befestigbar ist und dass der Maut-Rechner (1) auf der Armaturentafel (17) des Fahrzeuges abgestützt ist.

2. Befestigung eines Maut-Rechners nach Anspruch 1, **dadurch gekennzeichnet, dass** die Achse, um welche der Haltearm (5) schwenkbar ausgebildet ist, in etwa parallel zur Anzeigeebene des Displays verläuft.

3. Befestigung eines Maut-Rechners nach Anspruch 1 oder Anspruch 2, **dadurch gekennzeichnet, dass** sich der Maut-Rechner (1) mit einer Fläche auf der Armaturentafel (17) abstützt, die kleiner ist als die Fläche der Normalprojektion des Maut-Rechners (1) auf der Armaturentafel (17).

4. Befestigung eines Maut-Rechners nach mindestens einem der vorhergehenden Ansprüche, **dadurch gekennzeichnet, dass** sich der Maut-Rechner (1) im Wesentlichen kleinflächig auf der Armaturentafel (17) des Fahrzeuges abstützt.

5. Befestigung eines Maut-Rechners nach mindestens einem der vorhergehenden Ansprüche, **dadurch gekennzeichnet, dass** zwischen einem Bodenteil (3) des Gehäuses des Maut-Rechners (1) und der Armaturentafel (17) ein scheibenförmiges Auflageelement (16) vorgesehen ist.

6. Befestigung eines Maut-Rechners nach mindestens einem der vorhergehenden Ansprüche, **dadurch gekennzeichnet, dass** das Auflageelement (16) doppelseitig mit Klebstoff beschichtet ist.

7. Befestigung eines Maut-Rechners nach mindestens einem der vorhergehenden Ansprüche, **dadurch gekennzeichnet, dass** das Auflageelement (16) aus einem elastischen Werkstoff hergestellt ist.

8. Befestigung eines Maut-Rechners nach mindestens einem der vorhergehenden Ansprüche, **dadurch gekennzeichnet, dass** an dem Bodenteil (3) des Maut-Rechners (1) ein elastomerer Fuß angebracht ist.

9. Befestigung eines Maut-Rechners nach mindestens einem der vorhergehenden Ansprüche, **dadurch gekennzeichnet, dass** zwischen dem Bodenteil (3) des Maut-Rechners (1) und der Armaturentafel (17) Klettverbindungsmittel vorgesehen sind.

10. Befestigung eines Maut-Rechners nach mindestens einem der vorhergehenden Ansprüche, **dadurch gekennzeichnet, dass** das Aufliegen des Maut-Rechners (1) auf der Armaturentafel (17) im Wesentlichen derart vorgesehen ist, dass der Schwerpunkt des Maut-Rechners (1) unterstützt ist.

11. Befestigung eines Maut-Rechners nach mindestens einem der vorhergehenden Ansprüche, **dadurch gekennzeichnet, dass** der Haltearm (5) brückenförmig ausgebildet ist, und dass ein die Lagerschenkel (6, 7) des brückenförmigen Haltearmes (5) verbindender Steg (8) für die Befestigung des Maut-Rechners (1) an der Windschutzscheibe (15) des Fahrzeuges ausgestattet ist.

12. Befestigung eines Maut-Rechners nach Anspruch 11, **dadurch gekennzeichnet, dass** der Steg (8) mit den Lagerschenkeln (6, 7) des Haltearmes (5) schwenkbar verbunden ist.

13. Befestigung eines Maut-Rechners nach Anspruch 11, **dadurch gekennzeichnet, dass** der Steg (8) derart ausgebildet ist, dass er unmittelbar durch Kleben an der Windschutzscheibe (15) des Fahrzeuges befestigbar ist.

14. Befestigung eines Maut-Rechners nach Anspruch 11, **dadurch gekennzeichnet, dass** der Steg (8) derart ausgebildet ist, dass er in an der Windschutzscheibe (15) des Fahrzeuges befestigten Schienen einführbar und mit den Schienen verbindbar ist.

15. Befestigung eines Maut-Rechners nach Anspruch 11, **dadurch gekennzeichnet, dass** der Steg (8) als Gehäuse für einen durch die Windschutzscheibe (15) des Fahrzeuges hindurch mit im Wesentlichen ortsfesten Baken korrespondierenden Sende- und Empfangsmodul ausgebildet ist.
